# EUROPÄISCHE PATENTSCHRIFT

(11) **EP 2 659 788 B1**
(45) Veröffentlichungstag und Bekanntmachung des Hinweises auf die Patenterteilung: **17.12.2014**
(21) Anmeldenummer: 12166276.1
(22) Anmeldetag: 01.05.2012
(51) Int. Cl.: A23L 1/22, A23L 1/237

(54) **Flüssige Aromastoffgemische**
Liquid flavour compositions
Compositions d'arômes liquides

(43) Veröffentlichungstag der Anmeldung: 06.11.2013
(73) Patentinhaber: Symrise AG, 37603 Holzminden (DE)
(72) Erfinder: Schrader, Dirk, 37603 Holzminden (DE); Sabater-Luenzel, Christopher, 37603 Holzminden (DE); Henze, Thomas, 37603 Holzminden (DE); Batalia, Martina, 37691 Boffzen (DE); Heine, Sebastian, 37671 Höxter (DE)
(74) Vertreter: Fabry, Bernd

(56) Entgegenhaltungen:
- DE-A1-102009 019 551
- JP-A- 9 322 735
- JP-A- 2009 189 314
- US-A- 3 764 346
- US-A1- 2012 034 368

## Beschreibung

### Gebiet der Erfindung

Die Erfindung befindet sich auf dem Gebiet Aromen und betrifft flüssige von mit Nahrungsmitteln unter Verwendung der Stoffgemische sowie die Verwendung der Stoffgemische zur Beladung von Nahrungsmitteln.

### Stand der Technik

Eine Vielzahl industriell hergestellter Lebensmittel, wie beispielsweise Chips, Extrudate, Cerealien oder extrudierte Produkte, zu denen vor allem Nudeln gehören, werden durch das Aufstreuen von Gewürzmischungen, so genannte "Dust-ons" aromatisiert. Diese Dust-ons enthalten neben diversen Gewürzpulvern auch hohe Mengen an Kochsalz sowie Kräuter und Aromaextrakte. Auch die Dosierung dieser Aufstreuwürzen ist mit durchschnittlich 6 Gew.-% vergleichsweise hoch. Allein aus wirtschaftlichen Gründen besteht daher ein Bedarf nach einfacheren Prozessen zur Aromatisierung der genannten Produktgruppen, bei denen mit weniger Gewürzzugabe der gleiche sensorische Effekt erzielt wird. Dies gilt insbesondere für die gewünschte Salzigkeit der Produkte, denn der hohe Nacl-Zusatz verursacht nicht nur Rohstoff-, Transport- und Lagerkosten, sondern ist auch im Hinblick auf Bluthochdruck kritisch zu sehen. Unangenehm in diesem Zusammenhang ist zudem, dass beim Verbrauch, bei dem der Konsument sich üblicherweise nicht Messer und Gabel, sondern seiner Finger bedient, stets eine erhebliche Menge der Aufstreuwürzen ankleben, was vielfach als unangenehm empfunden wird. Auch für dieses Problem wird eine "clean finger" Lösung gesucht. Schließlich besteht ein weiteres Problem darin, die Top-Note, also die Menge an flüchtigen Geruchsträgern, der eingesetzten Aromasysteme zu verbessern, so dass insbesondere die Geruchsfreisetzung beim Öffnen der Lebensmittelpackungen intensiviert wird.

Aus der Japanische Patentanmeldung JP 2009 189314 A1 (House Food Corp.) sind in diesem Zusammenhang Gewürzmischungen bekannt, die mit den zu konfektionierenden Nahrungsmitteln direkt vermischt werden, und einen hydrophilen Emulgator mit einem HLB Wert von 8 bis 18 sowie einen lipophilen Emulgator mit einem HLB-Wert im Bereich von 3 bis 7 enthalten. Die Mischungen stellen O/W-Emulsionen dar und enthalten 20 bis 40 Gew.% Fettbestandteile und 45 bis 80 Gew.-% Wasser.

Gegenstand der Japanischen Patentanmeldung JP 2006 246885 A1 sind Emulsionen, die in der wässrigen Phase Proteine und Glucide und in der Ölphase gelöste Aromastoffe enthalten.

Schließlich werden in der Japanischen Patentanmeldung JP 9 322735 A2 (Ichibiki) fließfähige Gewürzmischungen beschrieben, zu deren Herstellung tierische Fette in einer wässrigen Lösung von Aromastoffen und Salzen stabil emulgiert werden.

Keine der beschriebenen Gewürzmischungen aus dem Stand der Technik ist indes in der Lage, die eingangs beschriebenen Probleme zu lösen.

Die komplexe Aufgabe der Erfindung hat somit darin bestanden, eine Lösung für ein ganzes Bündel von Teilaufgaben zur Verfügung zu stellen, als da sind:
- Verbesserte Applikation der Gewürzmischungen, insbesondere eine Alternative zum bislang üblichen Dust-on Verfahren;
- Intensivierung der sensorischen Wahrnehmung der Aromen bei verminderter Dosierung der Aromen;
- Gleichbleibender sensorischer Effekt der Salzigkeit bei verminderter Dosierung an anorganischen Salzen;
- Intensivierung der Top-Note beim Öffnen der Verpackungen;
- "Clean-Finger" Lösung, d.h. geringeres Anhaften der Würzmischungen beim Verzehr mit den Fingern.

### Beschreibung der Erfindung

Gegenstand der Erfindung sind flüssige Aromastoffgemische, enthaltend
(a) 15 bis 20 Gew.-% öllösliche Aromaemulsionen oder Aromakonzentrate,
(b) 15 bis 25 Gew.% anorganische Salze,
(c) 6 bis 12 Gew.-% wasserlösliche Bestandteile,
(d) 2 bis 10 Gew.-% wasserunlösliche Bestandteile und Farbstoffe,
(e) 0,1 bis 6 Gew.-% Hydrokolloide und Emulgatoren sowie
(f) ad 100 Gew.-% Wasser,
mit der Maßgabe, dass die Aromaemulsionen, die die Komponente (a) bilden, ihrerseits
(a1) 0,1 bis 40 Gew.-% öllösliche Aromastoffe,
(a2) 5 bis 20 Gew.-% Stabilisatoren,
(a3) 0 bis 1 Gew.-% Konservierungsmittel sowie
(a4) ad 100 Gew.-% Wasser
aufweisen.

Überraschenderweise wurde gefunden, dass die flüssigen Aromastoffgemische, die vorzugsweise Emulsionen darstellen, eine Alternative zur klassischen Aufstreuwürzung bei Snacks wie beispielsweise Chips, Keksen, Cerealien, aber auch Nudeln darstellen. Die Gemische sind dabei über eine lange Zeit lagerstabil und lassen sich problemlos auch bei höheren Viskositäten von bis zu 6.000 mPas versprühen. In der Verkostung hat sich herausgestellt, dass sie bei gleicher sensorischer Wirkung eine niedrigere Dosierung von Salzen und Aromen erlauben, was zu niedrigeren Rohstoffkosten führt, aber auch mit gesundheitlichen Vorteilen verbunden ist. Insbesondere zeichnen sich Nahrungsmittel, die mit den erfindungsgemäßen Stoffgemischen beladen sind, gegenüber konventionellen Produkten dadurch aus, dass bei gleichen Mengen an Aromastoffen und Salzen ein stärkerer olfaktorischer Eindruck und eine höhere Salzigkeit wahrgenommen werden. Außerdem haften die Würzmischungen weniger stark an den Fingern. Ein weiterer unerwarteter Effekt im Zusammenhang mit Kartoffelchips besteht darin, dass trotz des Wasseranteils, der beim Aufbringen der flüssigen Gemische auf bzw. in den Nahrungsmitteln verbleibt, kein Verlust der Knackigkeit ("Crunchiness") beobachtet wird, also das vom Verbraucher gewünschte typische Geräusch des Krachens ("Crunch") beim Verzehr nicht verlorengeht.

### Aromakonzentrate

Die erfindungsgemäßen Stoffgemische setzen sich aus den Aromakonzentraten, gewissermaßen einer Vormischung, und den flüssigen Endprodukten zusammen. Die Aromakonzentrate werden unter Einsatz öllöslicher Aromabestandteile hergestellt und durch Zugabe von geeigneten Stabilisatoren, vorzugsweise Polysacchariden, emulgiert bzw. in geringen Mengen als öllösliches Konzentrat eingesetzt. Typischerweise enthalten die Konzentrate etwa 50 bis etwa 80, vorzugsweise etwa 60 bis etwa 75 und insbesondere etwa 62 bis etwa 73 Gew.-% Wasser.

### a1) Öllösliche Aromastoffe

Öllösliche Aromastoffe, die als Komponente (a1) in den Aromakonzentraten enthalten sind, können beispielsweise ausgewählt sein aus der Gruppe, die von ätherischen Ölen gebildet wird. Hierunter versteht man sekundäre Pflanzeninhaltsstoffe, die üblicherweise durch (Wasserdampf-)Extraktion aus den unterschiedlichsten Pflanzen und Pflanzenteilen gewonnen werden. Überwiegend handelt es sich dabei um aromatische Verbindungen oder Terpene, speziell Mono- oder Sesquiterpene.

Typische Beispiele für aromatische Verbindungen sind die Phenole Carveol, Carvacrol, Thymol, die Phenylpropanoide Apiol, Zimtaldehyd, Anethol, Dillapiol und Estragol oder das Furanocumarin, Coriandrin. Zu den acyclischen Terpenen gehören Ocimen, Myrcen, Linalool, Geraniol, Neral, Citronellal, Geranylacetat, Linalylacetat, Farnesol und Farnesen. Beispiele für mono- und bicyclische Terpene sind Limonen, Terpinen, Phellandren, Carbon, Menthon, Menthol, Menthofuran, Cineol, Anethofuran, Bisabolol, Caryophyllen, Pinen, Camphen, Sabinol, Borneol, Campher, Fenchon, Chamazulen und Caryophyllen. Diesen aetherischen Ölen sind die unterschiedlichsten Geruchs- und Geschmacksnoten zu eigen, die von Zitrus (z.B. Limonen) bis Pfefferminze (z.B. Menthon), von Fenchel (z.B. Fenchon) zu Koriander (z.B. Coriandrin) und Dill (z.B. Dillapiol) reichen und dem Fachmann notorisch bekannt sind, so dass es keiner erfinderischen Tätigkeit bedarf, für eine bestimmte vorgegebene Geschmacksrichtung die entsprechend geeigneten öllöslichen Aromastoffe im Allgemeinen und die aetherischen Öle im Besonderen zu identifizieren und einzusetzen. Die obige Auflistung versteht sich daher als beispielhaft und nicht limitierend.

Die Aromastoffe können in den Konzentraten in Mengen von etwa 0,1 bis etwa 40 und vorzugsweise etwa 1 bis etwa 25 und insbesondere etwa 10 bis etwa 25 Gew.-% vorhanden sein.

### a2) Stabilisatoren

Bei den Stabilisatoren, die den Bestandteil (a2) der Aromakonzentrate bilden, handelt es sich um dem Fachmann geläufige Emulgatoren, vorzugsweise aber um Polysaccharide. Geeignete Beispiele sind Gummi Arabicum, Pektin, Xanthan, Quillaja Extrakte, Fettsäureester, Zuckerester, Sorbitanester modifizierte Stärke und deren Gemischen. Die Stabilisatoren können in Mengen von etwa 5 bis etwa 20 und vorzugsweise etwa 12 bis etwa 18 Gew.-% in den Konzentraten enthalten sein.

### a3) Konservierungsmittel

Optional, speziell wenn die Produkte nicht abschließend pasteurisiert werden, können die Aromakonzentrate Konservierungsmittel (Komponente a3) in Mengen von etwa 0,1 bis etwa 1 und vorzugsweise etwa 0,2 bis etwa 0,8 Gew.-% enthalten, sofern diese für den Einsatz in Nahrungsmitteln zugelassen sind. Typische Beispiele sind Zitronensäure, Weinsäure oder Ascorbinsäure und deren Alkalisalze.

### Flüssige Aromastoffgemische

Die im ersten Schritt hergestellten Voremulsionen oder Aromakonzentrate werden anschließend in einen mit einem geeigneten Hydrokolloid stabilisierten Grundstoff eingearbeitet, der neben wasserlöslichen Extrakten auch anorganische Salze, speziell natürlich Kochsalz enthält. Typischerweise beträgt der Anteil der Aromakonzentrate an den flüssigen Endzubereitungen etwa 10 bis etwa 25 und vorzugsweise etwa 12 bis etwa 20 Gew.-%. Die Endzubereitungen weisen einen Gesamtwassergehalt von etwa 40 bis etwa 75, vorzugsweise etwa 45 bis etwa 70 und insbesondere etwa 50 bis etwa 65 Gew.-% auf. Die flüssigen Endprodukte sind über einen Zeitraum von mehreren Wochen stabil, fließ- und pumpfähig und können daher sehr einfach auf den Nahrungsmitteln appliziert werden.

### b) Anorganische Salze

Neben den Aromakonzentraten (Komponente a) enthalten die flüssigen Aromastoffgemische vor allem anorganische Salze (Komponente b), die ausgewählt sind aus der Gruppe die gebildet wird von Natriumchlorid und Kaliumchlorid sowie deren Gemischen. Die Salze können in Mengen von etwa 15 und etwa 25, vorzugsweise etwa 17 bis etwa 22 Gew.-% enthalten sein.

### c) Wasserlösliche Bestandteile

Des Weiteren können die flüssigen Zubereitungen als Komponente (c) wasserlösliche Bestandteile enthalten, die ausgewählt sind aus der Gruppe, die gebildet wird von Pflanzen- und Kräuterextrakten, Süßstoffen und Geschmacksverstärkern.

Für die **Pflanzen- und Kräuterexemplare** kommen beispielsweise die folgenden Spezies in Frage: Bachbunge, Barbarakraut, Bärlauch, Bärwurz, Basilikum, Beifuß, Bibernelle, Bohnenkraut, Borretsch, Brunnenkresse, Curryblätter, Currykraut, Dill, Estragon, Fenchel, Gartenkresse, Gewöhnliches Hirtentäschel, Huacatay, Kapuzinerkresse, Kerbel, Korianderkraut, Kümmel, Lavendel, Liebstöckel, Lorbeer (Echter Lorbeer), Löwenzahn, Majoran, Echtes Mädesüß, Minze, Myrte, Natternkopf, Oregano (Dost), Petersilie, Pfefferminze, Pimpinelle, Rucola (Rauke), Rosmarin, Salbei, Sauerampfer, Selleriekraut, Schnittknoblauch, Schnittlauch, Taubnessel, Thymian, Waldmeister, Weinraute, Wiesenkerbel, Winterzwiebel (Lauchzwiebel), Ysop, Zitronengras, Zitronen-Melisse und Zitronenstrauch. Weiterhin geeignet sind Extrakte von Gemüsen, wie z.B. Paprika- oder Knoblauchpulver, sowie Käsepulver oder Hefeextrakte.

Die Pflanzen- und Kräuterextrakte können nach bekannten Extraktionsverfahren erhalten werden, d.h. beispielsweise durch wässrigen, alkoholischen oder wässrig-alkoholischen Auszug der Pflanzen bzw. Pflanzenteile bzw. der Blätter oder Früchte. Geeignet sind alle herkömmlichen Extraktionsverfahren wie z.B. Mazeration, Remazeration, Digestion, Bewegungsmazeration, Wirbelextraktion, Ultraschallextraktion, Gegenstromextraktion, Perkolation, Reperkolation, Evakolation (Extraktion unter vermindertem Druck), Diakolation oder Festflüssig-Extraktion unter kontinuierlichem Rückfluss. Für den großtechnischen Einsatz vorteilhaft ist die Perkolationsmethode. Als Ausgangsmaterial können frische Pflanzen oder Pflanzenteile eingesetzt werden, üblicherweise wird jedoch von getrockneten Pflanzen und/oder Pflanzenteilen ausgegangen, die vor der Extraktion mechanisch zerkleinert werden können. Hierbei eignen sich alle dem Fachmann bekannten Zerkleinerungsmethoden, als Beispiel sei die Gefriermahlung genannt. Als Lösungsmittel für die Durchführung der Extraktionen können organische Lösungsmittel, Wasser (vorzugsweise heißes Wasser einer Temperatur von über 80 °C und insbesondere von über 95 °C) oder Gemische aus organischen Lösungsmitteln und Wasser, insbesondere niedermolekulare Alkohole mit mehr oder weniger hohen Wassergehalten, verwendet werden. Besonders bevorzugt ist die Extraktion mit Methanol, Ethanol, Pentan, Hexan, Heptan, Aceton, Propylenglykolen, Polyethylenglykolen sowie Ethylacetat sowie Mischungen hieraus sowie deren wässrige Gemische. Die Extraktion erfolgt in der Regel bei 20 bis 100 °C, bevorzugt bei 30 bis 90 °C, insbesondere bei 60 bis 80 °C. In einer bevorzugten Ausführungsform erfolgt die Extraktion unter Inertgasatmosphäre zur Vermeidung der Oxidation der Wirkstoffe des Extraktes. Dies ist insbesondere bei Extraktionen bei Temperaturen über 40 °C von Bedeutung. Die Extraktionszeiten werden vom Fachmann in Abhängigkeit vom Ausgangsmaterial, dem Extraktionsverfahren, der Extraktionstemperatur, vom Verhältnis Lösungsmittel zu Rohstoff u.a. eingestellt. Nach der Extraktion können die erhaltenen Rohextrakte gegebenenfalls weiteren üblichen Schritten, wie beispielsweise Aufreinigung, Konzentration und/oder Entfärbung unterzogen werden. Falls wünschenswert, können die so hergestellten Extrakte beispielsweise einer selektiven Abtrennung einzelner unerwünschter Inhaltsstoffe, unterzogen werden. Die Extraktion kann bis zu jedem beliebigen Extraktionsgrad erfolgen, wird aber gewöhnlich bis zur Erschöpfung durchgeführt. Typische Ausbeuten (= Trockensubstanzmenge des Extraktes bezogen auf eingesetzte Rohstoffmenge) bei der Extraktion getrockneter Blätter liegen im Bereich von 3 bis 15, insbesondere 6 bis 10 Gew.-%. Die Extrakte können auch als Ausgangsstoffe für die Gewinnung der oben genannten reinen Wirkstoffe dienen, sofern diese nicht auf synthetischem Wege einfacher und kostengünstiger hergestellt werden können. Demzufolge kann der Wirkstoffgehalt in den Extrakten 5 bis 100, vorzugsweise 50 bis 95 Gew.-% betragen. Die Extrakte selbst können als wässrige und/oder in organischen Solventien gelöste Zubereitungen sowie als sprüh- bzw. gefriergetrocknete, wasserfreie Feststoffe vorliegen. Als organische Lösungsmittel kommen in diesem Zusammenhang beispielsweise die aliphatischen Alkohole mit 1 bis 6 Kohlenstoffatomen (z.B. Ethanol), Ketone (z.B. Aceton), Halogenkohlenwasserstoffe (z.B. Chloroform oder Methylenchlorid), niedere Ester oder Polyole (z.B. Glycerin oder Glycole) in Frage.

Als **Süßstoffe** bzw. süßende Stoffe kommen natürliche Di- und Oligosaccharide wie Sucrose, Fructose, Saccharose und dergleichen in Betracht. Es können jedoch auch - entweder alleine oder zusammen mit den natürlichen Vertretern - auch künstliche Zuckerersatzstoffe eingesetzt werden, wie z.B.:
- Curculin: eine Proteinfraktion, die aus der Pflanze *Curculigo latifolia* gewonnen werden;
- Miraculine: Glycoproteine, die aus der Wunderbeere isoliert werden;
- Osladine: Steroidsaponine, die im Rhizom des Gewöhnlichen Tüpfelfarns (*Polypodium vulgare*) vorkommen;
- Perillartin: ein chiraler racemischer Süßstoff, der das (E)-Oxim des Perillaaldehyds darstellt;
- Stevioside und deren Aglykone, wie beispielsweise Rebaudiosid A, B, C, D, E oder Dulcosi n
- Mogroside und deren Aglykone, die beispielsweise aus den Früchten der Luo Han Guo gewonnen werden;
- Dihydrochalcone, wie z.B. Neohesperidin Dihydrochalcon oder Naringin Dihydrochalcon.

Darüber hinaus können natürlich auch die klassischen Zuckerersatzstoffe eingesetzt werden, wie z.B. Saccharin, Acesulfam, Aspartam oder Superaspartam.

Als **Geschmacksverstärker** kommen ins besondere Glutamine in Betracht.

Die wasserlöslichen Bestandteile können in Mengen von etwa 6 bis etwa 12 und vorzugsweise etwa 8 bis etwa 10 Gew.-% enthalten sein.

### d) Wasserunlösliche Bestandteile und Farbstoffe

Neben den wasserlöslichen Extrakten können die Stoffgemische schließlich als Komponente (d) auch wasserunlösliche Bestandteile enthalten, die ausgewählt sind aus der Gruppe, die gebildet wird von Ballaststoffen, Pigmenten und Farbstoffen.

**Ballaststoffe** stellen weitgehend unverdauliche Nahrungsbestandteile, meist Polysaccharide dar, darunter insbesondere Kohlenhydrate, die vorwiegend pflanzlicher Herkunft sind. Zu den wasserunlöslichen Ballaststoffen zählen insbesondere die Cellulosen und Hemicellulosen, speziell Fasern, wie sie in Getreide, Obst und Gemüse sowie insbesondere in Vollkorngetreide, Gerste und Hülsenfrüchten zu finden sind.

Die Auswahl der **Farbstoffe und Pigmente** orientiert sich an ihrer Zulassung für den menschlichen Verzehr. Beispiele für gelbe, rote oder orange Farbstoffe sind:
- E 100 - Curcumin;
- E101 - Riboflavin;
- E 101a - Riboflavin-5-Phosphat;
- E 102 - Tartrazin;
- E 104 - Chinolingelb;
- E 110 - Gelborange S;
- E 160 a - Carotine;
- E 160 b - Annatto;
- E 160 c - Capsanthin;
- E 160 d - Lycopin;
- E 160 e - Beta-apo-8'-Carotinal;
- E 160 f - Beta-apo-8'-Carotinalethylester;
- E 161 b - Lutein;
- E 161 g - Canthaxanthin;
- E 161 h - Zeaxanthin;
- E 162 - Betanin;
- E 163 - Anthocyane;
- E 180 - Litholrubin BK;
- E 120 - Karmin;
- E 122 - Azorubin;
- E 123 - Amaranth;
- E 124 - Cochenillerot A;
- E 127 - Erythrosin;
- E 129 - Allurarot AC

Beispiele für blaue Farbstoffe sind:
- E 131 - Patentblau V;
- E 132 - Indigotin;
- E 133 - Brillantblau FCF

Beispiel für grüne Farbstoffe sind:
- E 140 - Chlorophyll;
- E 141 - Kupferhaltige Komplexe der Chlorophylle und Chlorophylline;
- E 142 - Grün S

Beispiele für braunr und schwarze Farbstoffe sind:
- E 150a-d - Zuckerkulör;
- E 151 - Brillantschwarz BN;
- E153-Aktivkohle;
- E 154 - Braun FK;
- E 155 - Braun HT

Beispiele für weiße und metallische Farbstoffe sind:
- E 170 - Calciumcarbonat;
- E 171 - Titandioxid;
- E 172 - Eisenoxid;
- E 173 - Aluminium;
- E 174 - Silber;
- E 175 - Gold.

Der Anteil dieser Stoffe liegt typisch bei etwa 2 bis etwa 10 und vorzugsweise etwa 5 bis etwa 8 Gew.-%.

### e) Hydrokolloide und Emulgatoren

Als Komponente (e) können schließlich Hydrokolloide enthalten sein, die ähnlich wie die Polysaccharide, die die Gruppe (a2) bilden, eine stabilisierende Wirkung besitzen und daher mit diesen überlappen. Geeignete Beispiele sind ausgewählt sind aus der Gruppe, die gebildet wird von Gummi Arabicum, Pektin, Galaktomannanen, Xanthan, Guar, Johannisbrotkernmehl, Gellan, modifizierter Stärke und deren Gemischen.

Unter den Hydrokolloiden ist das **Gummi Arabicum** bevorzugt. Gummi Arabicum besteht aus farblosen bis braunen, matten, spröden, geruchlosen Stücken mit glänzendem Bruch, die sich in warmem Wasser zu einer klaren, zähen, klebrigen, fad schmeckenden und schwach sauer reagierenden Flüssigkeit auflösen und unlöslich in Alkohol sind. Der Stoff besteht hauptsächlich aus den sauren Erdalkali- und Alkalisalzen der sogenannten Arabinsäure (Polyarabinsäure), unter der man ein verzweigtes, aus L-Arabinose, D-Galactose, L-Rhamnose und D-Glucuronsäure im Verhältnis 3:3:1:1 bestehendes Polysaccharid versteht.

**Pektine** sind pflanzliche Polysaccharide, die im Wesentlichen aus alpha-1,4-glykosidisch verknüpften D-Galcturonsäure-Einheiten bestehen. Ernährungsphysiologisch betrachtet stellen Pektine für den Menschen Ballaststoffe dar.

**Galaktomannane** stellen stärkeähnliche Substanzen dar, die aus Kohlenhydratketten aufgebaut sind. Die Hauptkette besteht aus Mannose, die mit kurzen Seitenketten aus Galactose-Molekülen verzweigt wird.

**Xanthan** ist ein natürliches Verdickungs- und Geliermittel (E 415). Es wird mit Hilfe von Bakterien der der Gattung *Xanthomonas* aus zuckerhaltigen Substraten gewonnen und ist auch für Ökolebensmittel zugelassen.

**Guar** oder auch Guar(kern)mehl (E 412) besteht im Wesentlichen aus dem Polysaccharid Guaran. Man erhält es, indem man die äußeren Schichten und den Keimling vom Samen der Guarbohne abtrennt und dann vermahlt.

**Gellan** gehört ebenfalls zu den Polysacchariden. Es ist linear aufgebaut und besteht aus einer Rhamnose-, einer Glucuronsäure- und zwei Glucoseeinheiten als Monomer, die mit Essigsäure und Glycerinsäure verestert sind. Die molare Masse beträgt ca. 500.000 Dalton Als **modifizierte Stärke** kommt insbesondere n-Osa-Stärke in Frage.

Besonders geeignete **Emulgatoren** sind neben ***Quillaja-Extrakten*** insbesondere auch die folgenden Stoffklassen:
- ***Alkyl- und*/*****oder Alkenyloligoglycoside**,* ihre Herstellung und ihre Verwendung sind aus dem Stand der Technik bekannt. Ihre Herstellung erfolgt insbesondere durch Umsetzung von Glucose oder Oligosacchariden mit primären Alkoholen mit 8 bis 18 Kohlenstoffatomen. Bezüglich des Glycosidrestes gilt, daß sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.
- Typische Beispiele für geeignete ***Partialglyceride*** sind Hydroxystearinsäuremonoglycerid, Hydroxystearinsäurediglycerid, Isostearinsäuremonoglycerid, Isostearinsäurediglycerid, Ölsäuremonoglycerid, Ölsäurediglycerid, Ricinolsäuremoglycerid, Ricinolsäurediglycerid, Linolsäuremonoglycerid, Linolsäurediglycerid, Linolensäuremonoglycerid, Linolensäurediglycerid, Erucasäuremonoglycerid, Erucasäurediglycerid, Weinsäuremonoglycerid, Weinsäurediglycerid, Citronensäuremonoglycerid, Citronendiglycerid, Äpfelsäuremonoglycerid, Äpfelsäurediglycerid sowie deren technische Gemische, die untergeordnet aus dem Herstellungsprozeß noch geringe Mengen an Triglycerid enthalten können. Ebenfalls geeignet sind Anlagerungsprodukte von 1 bis 30, vorzugsweise 5 bis 10 Mol Ethylenoxid an die genannten Partialglyceride.
- Als ***Sorbitanester*** kommen Sorbitanmonoisostearat, Sorbitansesquiisostearat, Sorbitandiisostearat, Sorbitantriisostearat, Sorbitanmonooleat, Sorbitansesquioleat, Sorbitandioleat, Sorbitantrioleat, Sorbitanmonoerucat, Sorbitansesquierucat, Sorbitandierucat, Sorbitantrierucat, Sorbitanmonoricinoleat, Sorbitansesquiricinoleat, Sorbitandiricinoleat, Sorbitantriricinoleat, Sorbitanmonohydroxystearat, Sorbitansesquihydroxystearat, Sorbitandihydroxystearat, Sorbitantrihydroxystearat, Sorbitanmonotartrat, Sorbitansesqui-tartrat, Sorbitanditartrat, Sorbitantritartrat, Sorbitanmonocitrat, Sorbitansesquicitrat, Sorbitandicitrat, Sorbitantricitrat, Sorbitanmonomaleat, Sorbitansesquimaleat, Sorbitan-dimaleat, Sorbitantrimaleat sowie deren technische Gemische. Ebenfalls geeignet sind Anlagerungsprodukte von 1 bis 30, vorzugsweise 5 bis 10 Mol Ethylenoxid an die genannten Sorbitanester. Anstelle vom Sorbitan können sich die Ester auch von der Glucose oder Mannose ableiten.
- Typische Beispiele für geeignete ***Polyglycerinester*** sind Polyglyceryl-2 Dipolyhydroxystearate (Dehymuls® PGPH), Polyglycerin-3-Diisostearate (Lameform® TGI), Polyglyceryl-4 Isostearate (Isolan® Gl 34), Polyglyceryl-3 Oleate, Diisostearoyl Polyglyceryl-3 Diisostearate (Isolan® PDI), Polyglyceryl-3 Methylglucose Distearate (Tego Care® 450), Polyglyceryl-3 Beeswax (Cera Bellina®), Polyglyceryl-4 Caprate (Polyglycerol Caprate T2010/90), Polyglyceryl-3 Cetyl Ether (Chimexane® NL), Polyglyceryl-3 Distearate (Cremophor® GS 32) und Polyglyceryl Polyricinoleate (Admul® WOL 1403) Polyglyceryl Dimerate Isostearate sowie deren Gemische. Beispiele für weitere geeignete Polyolester sind die gegebenenfalls mit 1 bis 30 Mol Ethylenoxid umgesetzten Mono-, Di- und Triester von Trimethylolpropan oder Pentaerythrit mit Laurinsäure, Kokosfettsäure, Talgfettsäure, Palmitinsäure, Stearinsäure, Ölsäure, Behensäure und dergleichen.

Die typische Einsatzmenge der Hydrokolloide beträgt hier etwa 0,1 bis etwa 4 und vorzugsweise etwa 0,5 bis etwa 2 Gew.-%.

### Verfahren zu Herstellung der flüssigen Aromastoffgemische

Ein weiterer Gegenstand der vorliegenden Erfindung betrifft ein Verfahren zur Herstellung von flüssigen Aromastoffgemischen, bei dem man
(i) eine erste wässrige Aromaemulsion herstellt, indem man
   (a1) 0,1 bis 40 Gew.-% öllösliche Aromastoffe,
   (a2) 5 bis 20 Gew.-% Stabilisatoren sowie
   (a3) 0 bis 1 Gew.-% Konservierungsmittel
      in ad 100 Gew.-% Wasser unter starker Scherung zu einer homogenen Emulsion verarbeitet, und
(ii)
   (a) 10 bis 25 Gew.-% der zuvor hergestellten Aromaemulsionen oder Aromakonzentrate,
   (b) 5 bis 20 Gew.% anorganische Salze,
   (c) 6 bis 12 Gew.-% wasserlösliche Bestandteile,
   (d) 2 bis 10 Gew.-% wasserunlösliche Bestandteile und Farbstoffe sowie
   (e) 0,1 bis 6 Gew.-% Hydrokolloide und Emulgatoren
in ad 100 Gew.-% Wasser unter starker Scherung zu einer homogenen Dispersion vera rbe itet.

In einer bevorzugten Ausführungsform wird zur Herstellung der ersten wässrigen Aromaemulsion eine Wasserphase gebildet, die den Stabilisator und gegebenenfalls weitere Hilfsstoffe, also beispielsweise Konservierungsmittel oder Säuerungsmittel, Farbstoffe und dergleichen enthalten. Dieser werden dann die öllöslichen Aromastoffe zugesetzt. Anschließend werden die beiden Phasen durch starke Scherung homogenisiert, wozu sich beispielsweise ein Ultra-Turrax besonders eignet. Es können aber natürlich auch andere dem Fachmann für derartige Zwecke bekannte Homogenisierungs- und Dispergierverfahren angewendet werden.

Die Herstellung der flüssigen Aromastoffgemische kann in ganz ähnlicher Weise erfolgen, d.h. man legt die Wasserphase mit den Salzen, Extrakten und Hydrokolloiden vor, gibt die Aromaemulsionen hinzu und homogenisiert die Zubereitung entsprechend wie oben beschrieben. Falls gewünscht, können die Produkte anschließend pasteurisiert oder in anderer Weise thermisch nachbehandelt werden. Die Produkte stellen Emulsionen oder feinteilige Dispersionen dar und sind bei Umgebungstemperatur mindestens 6 Wochen lagerstabil, d.h. innerhalb dieser Zeit findet keine nennenswerte Separation oder Abscheidung von festen Stoffen statt. Die Viskosität liegt üblicherweise im Bereich von etwa 1.000 bis etwa 6.000 und vorzugsweise etwa 1.500 bis etwa 4.000 mPas (RVT-Methode, 20°C, 200 Upm, Spindel 1).

### Verfahren zur Beladung von Nahrungsmitteln

Ein weiterer Gegenstand der Erfindung betrifft ein Verfahren zur Beladung von Nahrungsmitteln mit Aromastoffgemischen, bei dem man die erfindungsgemäßen flüssigen Stoffgemische auf die Nahrungsmittel aufsprüht. Zu diesem Zweck werden die wie oben beschrieben hergestellten Flüssigprodukte, die typisch eine Viskosität im Bereich von etwa 1.000 bis etwa 6.000 und vorzugsweise etwa 1.500 bis etwa 4.000 mPas (RVT-Methode, 20°C, 200 Upm, Spindel 1) besitzen, beispielsweise mit Hilfe einer Zwei- oder Mehrstoffdüse versprüht. Da die flüssigen Stoffgemische problemlos gepumpt und versprüht werden können, ist dieser Aspekt der Anwendung unkritisch. Als geeignete Sprüheinrichtungen kommen alle Bauteile in Betracht, die dem einschlägigen Fachmann, also einem Lebensmitteltechniker mit mehrjähriger Berufserfahrung, für diesen Zweck notorisch bekannt sind. Typischerweise erfolgt die Zufuhr der flüssigen Produkte axial, wobei diese in der Mischkammer der Düse mit einem tangential dazu geführten Gasstrom (Luft oder Inertgas) in Kontakt gebracht werden. Durch die Wechselwirkung von Gas und Flüssigkeit entstehen in der Mischkammer starke Turbulenzen. Die wirbelnde Flüssigkeit sucht einen Austritt aus der Düse, prallt gegen die Wände und die Verteilerplatte und strömt dann schließlich durch die Austrittsöffnung der Düse, wobei die Tröpfchen infolge der extremen Scherkräfte und unter Umständen unter Einsatz eines weiteren Ablenkringes als fein zerstäubter Sprühkegel auf das Produkt aufgebracht werden. Die Beladung der Nahrungsmittel wird dabei so gesteuert, dass die Dosierung schließlich etwa 2 bis etwa 4 Gew.-% bezogen auf das Nahrungsmittel beträgt und sich ein homogenes Sprühbild auf der Produktoberfläche ergibt.

### Gewerbliche Anwendbarkeit

Ein weiterer Gegenstand der Erfindung betrifft Nahrungsmittel, die mit den erfindungsgemäßen Stoffgemischen beladen worden sind. Typische Beispiele für geeignete Nahrungsmittel sind Kekse, Cerealien, extrudierte Nahrungsmittel, wie etwa Nudeln, und insbesondere Extrudate, z.B. aus Mais oder Weizen, speziell aber Kartoffelchips. Diese werden typischerweise mit etwa 2 bis etwa 7 Gew.-% der Stoffgemische beladen. Die Dosierung liegt damit etwa 30 bis 40 % niedriger als dies üblicherweise der Fall ist; trotzdem werden die gleichen sensorischen Ergebnisse erzielt.

Ein letzter Gegenstand der vorliegenden Erfindung betrifft schließlich die Verwendung der erfindungsgemäßen Stoffgemische zur Beladung von Nahrungsmitteln.

### Beispiele

### Herstellbeispiel H1

### a) Herstellung der Voremulsion

In einem Ultraturrax mit einem Fassungsvermögen von 2,5 I wurden 700 ml Wasser vorgelegt und mit 15 g öllöslicher Aromastoffe sowie 15 g Gummi Arabicum vermischt. Anschließend wurde die Zubereitung über einen Zeitraum von 3 Minuten homogenisiert.

### b) Herstellung der Aromaemulsion

In einem Leitstrahlmischer der Firma Ystral wurden 200 g der oben hergestellten Voremulsion, 250 g Kochsalz, 100 g wasserunlösliche Aroma-und Kräuterextrakte, 50 g getrocknete Gewürze und Kräuter sowie 20 g Pektin vorgelegt, in 380 g Waser dispergiert und über einen Zeitraum von 30 Minuten homogenisiert.

### c) Aufbringen der Aromaemulsion auf Lebensmittel

Die Aromaemulsion aus Beispiel 1b) wurde anschließend mit Hilfe einer Druckmischdüse vom Typ 770 der Firma Arcall/UK mit zwei Einbauteilen mit Drallschlitzen auf unbehandelte Kartoffelchips appliziert. Der Streukegel der Düse betrug dabei 70°, die Beladung 4 g Aromaemulsion/100 g Kartoffelchips.

### Anwendungsbeispiel 1: Bestimmung der Geruchsintensität

Jeweils 50 g der gemäß Beispiel H1 erhaltenen Kartoffelchips wurde mit Hilfe dynamischer GC-Headspace mit einem analogen Produkt verglichen, bei dem eine gleiche Menge Aromastoffe nach der klassischen "Dust-on-Methode" (also durch Aufstreuen) aufgebracht worden war. Mittels der kombinieren GC/MS-Methode wurde die Menge an flüchtigen Aromastoffen im Gasraum über der Probe bestimmt. Dabei wurde festgestellt, dass im Fall der erfindungsgemäßen flüssigen Aromaemulsionen eine 6fach höhere Konzentration an Aromastoffen vorlag. Das bedeutet, dass durch Auftragen der flüssigen Aromakonzentrate gegenüber dem üblichen Aufstreuverfahren ein wesentlich intensiverer Geruch erzielt wird. Diese Effekte konnten in Sensoriktests bestätigt werden.

### Anwendungsbeispiel 2: Bestimmung der Salzigkeit

In einem Dreieckstext wurden 41 Probanden gebeten, Chips aromatisiert mit aufgestreutem Kochsalz mit anderen Chips zu vergleichen, bei denen die Würze im Sinne der Erfindung flüssig aufgesprüht worden war; die Nacl-Konzentrationen waren dabei in beiden Fällen gleich eingestellt. Die Chips wurden den Probanden zerkleinert gereicht, um ein Abrieseln des Salzes und damit eine Verfälschung der Ergebnisse zu verhindern. Von den 41 Probanden waren 39 der Meinung, dass sich die Chips in ihrem Geschmack signifikant unterschieden, 37 von ihnen empfanden die mit der flüssigen Aromalösung behandelten Chips trotz gleicher NaCl-Konzentration als deutlich salziger. Daraus folgt umgekehrt, dass mit Hilfe der Flüssigapplikation die Kochsalzmenge deutlich gesenkt werden kann, ohne den Salzgeschmack dadurch zu vermindern.

## Patentansprüche

1. Flüssige Aromastoffgemische, enthaltend
(a) 10 bis 25 Gew.-% öllösliche Aromaemulsionen oder Aromakonzentrate,
(b) 15 bis 25 Gew.% anorganische Salze,
(c) 6 bis 12 Gew.-% wasserlösliche Bestandteile,
(d) 2 bis 10 Gew.-% wasserunlösliche Bestandteile und Farbstoffe,
(e) 0,1 bis 6 Gew.-% Hydrokolloide und Emulgatoren sowie
(f) ad 100 Gew.-% Wasser,
mit der Maßgabe, dass die Aromaemulsionen, die die Komponente (a) bilden, ihrerseits
(a1) 0,1 bis 40 Gew.-% öllösliche Aromastoffe,
(a2) 5 bis 20 Gew.-% Stabilisatoren,
(a3) 0 bis 1 Gew.-% Konservierungsmittel sowie
(a4) ad 100 Gew.-% Wasser
aufweisen.

2. Stoffgemische nach Anspruch 1, **dadurch gekennzeichnet, dass** die Aromaemulsionen als Komponente (a1) öllösliche Aromastoffe enthalten, die ausgewählt sind aus der Gruppe, die gebildet wird von ätherischen Ölen aus der Gruppe der Aromaten und Terpene.

3. Stoffgemische nach den Ansprüchen 1 und/oder 2, **dadurch gekennzeichnet, dass** die Aromaemulsionen als Komponente (a2) Polysaccharide enthalten, die ausgewählt sind aus der Gruppe, die gebildet wird von Gummi Arabicum, Pektin, Xanthan, modifizierter Stärke und deren Gemischen.

4. Stoffgemische nach mindestens einem der Ansprüche 1 bis 3, **dadurch gekennzeichnet, dass** sie als Komponente (b) anorganische Salze enthalten, die ausgewählt sind aus der Gruppe die gebildet wird von Natriumchlorid und Kaliumchlorid sowie deren Gemischen.

5. Stoffgemische nach mindestens einem der Ansprüche 1 bis 4, **dadurch gekennzeichnet, dass** sie als Komponente (c) wasserlösliche Bestandteile enthalten, die ausgewählt sind aus der Gruppe, die gebildet wird von Pflanzen- und Kräuterextrakten, Süßstoffen und Geschmacksverstärkern.

6. Stoffgemische nach mindestens einem der Ansprüche 1 bis 5, **dadurch gekennzeichnet, dass** sie als Komponente (d) wasserunlösliche Bestandteile enthalten, die ausgewählt sind aus der Gruppe, die gebildet wird von Ballaststoffen, Pigmenten und Farbstoffen

7. Stoffgemische nach mindestens einem der Ansprüche 1 bis 6, **dadurch gekennzeichnet, dass** sie als Komponente (e) Hydrokolloide enthalten, die ausgewählt sind aus der Gruppe, die gebildet wird von Gummi Arabicum, Pektin, Xanthan, Galactomannanen, Guar, Johannisbrotkernmehl, Gellan, CMC und deren Gemischen.

8. Verfahren zur Herstellung von flüssigen Aromastoffgemischen, bei dem man
(i) eine erste wässrige Aromaemulsion herstellt, indem man
(a1) 0,1 bis 40 Gew.-% öllösliche Aromastoffe,
(a2) 5 bis 20 Gew.-% Stabilisatoren sowie
(a3) 0 bis 1 Gew.-% Konservierungsmittel
in ad 100 Gew.-% Wasser unter starker Scherung zu einer homogenen Emulsion verarbeitet, und
(ii)
(a) 10 bis 25 Gew.-% der zuvor hergestellten Aromaemulsionen oder Aromakonzentrate,
(b) 15 bis 25 Gew.% anorganische Salze,
(c) 6 bis 12 Gew.-% wasserlösliche Bestandteile und Farbstoffe,
(d) 2 bis 10 Gew.-% wasserunlösliche Bestandteile sowie
(e) 0,1 bis 6 Gew.-% Hydrokolloide und Emulgatoren
in ad 100 Gew.-% Wasser unter starker Scherung zu einer homogenen Dispersion verarbeitet.

9. Verfahren nach Anspruch 8, **dadurch gekennzeichnet, dass** man die flüssigen Aromastoffgemische anschließend pasteurisiert oder in anderer Weise thermisch nachbehandelt.

10. Verfahren zur Beladung von Nahrungsmitteln mit Aromastoffgemischen, bei dem man die flüssigen Stoffgemische nach Anspruch 1 auf die Nahrungsmittel aufsprüht.

11. Verfahren nach Anspruch 10, **dadurch gekennzeichnet, dass** man flüssige Stoffgemische einsetzt, die eine Viskosität im Bereich von 1.000 bis 6.000 mPas (RVT-Methode, 20°C, 200 Upm, Spindel 1) einsetzt.

12. Nahrungsmittel, die mit den Stoffgemischen des Anspruchs 1 beladen worden sind.

13. Nahrungsmittel nach Anspruch 12, **dadurch gekennzeichnet, dass** es sich um Kekse, Nudeln, Kartoffelchips oder Extrudate aus Kartoffeln, Weizen oder Mais, gegebenenfalls gebacken oder frittiert, handelt.

14. Nahrungsmittel nach Anspruch 12, **dadurch gekennzeichnet, dass** sie mit 2 bis 7 Gew.-% der Stoffgemische beladen worden sind.

15. Verwendung von Stoffgemischen nach Anspruch 1 zur Beladung von Nahrungsmitteln.

## Claims

1. Liquid aroma mixtures, comprising
(a) 10 to 25 % b.w. oil soluble aroma emulsions or aroma concentrates;
(b) 15 to 25 % b.w. inorganic salts;
(c) 6 to 12 % b.w. water soluble compounds;
(d) 2 to 10 % b.w. water insoluble compounds and dyes;
(e) 0.1 to 6 % hydrocolloids and emulsifiers; and
(f) ad 100 % b.w. water;
on condition that said aroma emulsions forming component (a) encompass
(a1) 0.1 to 40 % b.w. oil soluble aroma compounds;
(a2) 5 to 20 % b.w. stabilizers;
(a3) 0 to 1% preservatives; and
(a4) ad 100 % water.

2. Mixtures according to Claim 1, **characterized in that** said aroma emulsions contain as component (a1) aroma compounds selected from the group consisting of essential oils selected from the groups encompasing aromates and terpens.

3. Mixtures according to Claim 1 and/or Claim 2, **characterized in that** said aroma emulsions contain as component (a2) polysaccharides selected from the group consisting of gum arabic, pectin, xanthan, modified starch and their mixtures.

4. Mixtures according to at least of Claims 1 to 3, **characterized in that** said aroma emulsions contain as component (b) inorganic salts selected from the group consisting of sodium chloride, potassium chloride and their mixtures.

5. Mixtures according to at least of Claims 1 to 4, **characterized in that** said aroma emulsions contain as component (c) water soluble compounds selected from the group consisting of plant and herb extracts, sweeteners and aroma boosters.

6. Mixtures according to at least of Claims 1 to 5, **characterized in that** said aroma emulsions contain as component (d) water insoluble compounds, selected from the group consisting of fibres, pigments and dyes.

7. Mixtures according to at least of Claims 1 to 6, **characterized in that** said aroma emulsions contain as component (e) hydrocolloids selected from the group consisting of gum arabic, pectin, xanthan, galactomannan, guar, carob gum, gellan, CMC and their mixtures.

8. Process for making liquid aroma mixtures comprising the steps of
(i) preparing a first aqueous aroma emulsion by treating
(a1) 0.1 to 40 % b.w. oil soluble aroma compounds;
(a2) 5 to 20 % b.w. stabilizers; and
(a3) 0 to 1 preservatives
in ad 100 % b.w. water under strong shear strain to obtain a homogenous emulsion; and
(ii) treating
(a) 10 to 25 % b.w. of the aroma emulsion or aroma concentrate obtained from step (i);
(b) 5 to 25 % b.w. inorganic salts;
(c) 6 to 12 % b.w. water soluble compounds and dyes;
(d) 2 to 10 % b.w. water insoluble compounds, and
(e) 0.1 to 6 % b.w. hydrocolloid and emulsifiers
in ad 100 % b.w water under strong shear strain to obtain a homogenous dispersion.

9. Process according to Claim 8, **characterized in that** said aroma mixtures are subsequently subjected to pasteurization or any other thermic after-treatment.

10. Process for loading of food articles with aroma mixtures, in that liquid mixtures according to Claim 1 are sprayed on said food articles.

11. Process according to Claim 10, **characterized in that** liquid aroma mixtures are used, showing a viscosity in the range of 1,000 to 6,000 mPa.s (RVT method, 20 °C, 200 rpm, and spindle 1).

12. Food articles loaded with the mixtures of Claim 1.

13. Food articles according to Claim 12, **characterized in that** they represent cookies, noodles, potato chips or extrudates from potatoes, wheat, and maize, optionally baked or fried.

14. Food articles according to Claim 12, **characterized in that** they are loaded with 2 to 7 % b.w. of said aroma mixtures.

15. Use of mixtures according to Claim 1 for the loading of food articles.

## Revendications

1. Mélanges liquides de substances aromatiques, contenant
(a) 10 à 25% en poids d'émulsions d'arômes ou de concentrâtes d'arômes solubles dans l'huile
(b) 15 à 25% en poids de sels inorganiques,
(c) 6 à 12% en poids de constituants solubles dans l'eau,
(d) 2 à 10% en poids de constituants et de colorants insolubles dans l'eau
(e) 0,1 à 6% en poids d'hydrocolloïdes et d'émulsifiants ainsi que
(f) ad 100% en poids d'eau,
à condition que les émulsions d'arômes, qui forment le composant (a), présentent à leur tour
(a1) 0,1 à 4% en poids de substances aromatiques solubles dans l'huile,
(a2) 5 à 20% en poids de stabilisants,
(a3) 0 à 1% en poids de conservateurs ainsi que
(a4) ad 100% en poids d'eau.

2. Mélanges de substances selon la revendication 1, **caractérisés en ce que** les émulsions d'arômes contiennent, comme composant (a1), des substances aromatiques solubles dans l'huile qui sont choisies dans le groupe formé par les huiles essentielles du groupe des aromatiques et des terpènes.

3. Mélanges de substances selon les revendications 1 et/ou 2, **caractérisés en ce que** les émulsions d'arômes contiennent, comme composant (a2), des polysaccharides qui sont choisis dans le groupe formé par la gomme arabique, la pectine, le xanthane, l'amidon modifié et leurs mélanges.

4. Mélanges de substances selon au moins l'une quelconque des revendications 1 à 3, **caractérisés en ce qu'**ils contiennent, comme composant (b), des sels inorganiques, qui sont choisis dans le groupe formé par le chlorure de sodium et le chlorure de potassium ainsi que leurs mélanges.

5. Mélanges de substances selon au moins l'une quelconque des revendications 1 à 4, **caractérisés en ce qu'**ils contiennent, comme composant (c), des constituants solubles dans l'eau qui sont choisis dans le groupe formé par les extraits végétaux et d'herbes aromatiques, les édulcorants et les exhausteurs de goût.

6. Mélanges de substances selon au moins l'une quelconque des revendications 1 à 5, **caractérisés en ce qu'**ils contiennent, comme composant (d), des constituants insolubles dans l'eau, qui sont choisis dans le groupe formé par les fibres alimentaires, les pigments et les colorants.

7. Mélanges de substances selon au moins l'une quelconque des revendications 1 à 6, **caractérisés en ce qu'**ils contiennent, comme composant (e), des hydrocolloïdes qui sont choisis dans le groupe formé par la gomme arabique, la pectine, le xanthane, les galactomannanes, la gomme guar, la gomme de caroube, le gellane, la CMC et leurs mélanges.

8. Procédé pour la préparation de mélanges liquides de substances aromatiques, dans lequel
(i) on prépare une première émulsion aqueuse d'arômes, en ce qu'on transforme
(a1) 0,1 à 40% en poids de substances aromatiques solubles dans l'huile,
(a2) 5 à 20% en poids e stablisants et
(a3) 0 à 1% en poids de conservateurs
dans ad 100% d'eau sous un cisaillement important en une émulsion homogène et on transforme
(ii)
(a) 10 à 25% en poids des émulsions d'arômes ou concentrâtes d'arômes préparés ci-dessus
(b) 15 à 25% en poids de sels inorganiques,
(c) 6 à 12% en poids de constituants et de colorants solubles dans l'eau,
(d) 2 à 10% en poids de constituants insolubles dans l'eau et
(e) 0,1 à 6% en poids d'hydrocolloïdes et d'émulsifiants
dans ad 100% d'eau sous un cisaillement important en une dispersion homogène.

9. Procédé selon la revendication 8, **caractérisé en ce qu'**on pasteurise ou traite ultérieurement thermiquement d'une autre manière les mélanges liquides de substances aromatiques.

10. Procédé pour charger des aliments de mélanges de substances aromatiques, dans lequel on pulvérise les mélanges liquides de substances selon la revendication 1 sur les aliments.

11. Procédé selon la revendication 10, **caractérisé en ce qu'**on utilise des mélanges liquides de substances qui présentent une viscosité dans la plage de 1000 à 6000 mPa.s (procédé RVT, 20°C, 200 t/min, mobile 1).

12. Aliments qui ont été chargés par les mélanges de substances de la revendication 1.

13. Aliments selon la revendication 12, **caractérisés en ce qu'**il s'agit de biscuits, de pâtes, de chips de pomme de terre ou de produits extrudés de pomme de terre, de blé ou de maïs, le cas échéant cuits ou frits.

14. Aliments selon la revendication 12, **caractérisés en ce qu'**ils ont été chargés par 2 à 7% en poids des mélanges de substances.

15. Utilisation de mélanges de substances selon la revendication 1 pour charger des aliments.
